# EUROPÄISCHE PATENTSCHRIFT

(11) **EP 0 551 343 B1**
(45) Veröffentlichungstag und Bekanntmachung des Hinweises auf die Patenterteilung: **14.06.1995**
(21) Anmeldenummer: 91917355.9
(22) Anmeldetag: 04.10.1991
(51) Int. Cl.: F16H 41/30, F16H 57/04

(54) **PUMPENANTRIEB FÜR EIN AUTOMATGETRIEBE EINES KRAFTFAHRZEUGS**
PUMP DRIVE FOR A MOTOR VEHICLE AUTOMATIC GEARBOX
ENTRAINEMENT DE POMPE POUR LA TRANSMISSION AUTOMATIQUE D'UN VEHICULE A MOTEUR

(30) Priorität: 10.10.1990 DE 4032081
(43) Veröffentlichungstag der Anmeldung: 21.07.1993
(73) Patentinhaber: ZF FRIEDRICHSHAFEN Aktiengesellschaft, 88038 Friedrichshafen (DE)
(72) Erfinder: BAUKNECHT, Gert, D-7997 Immenstaad (DE); PFALZ, Rainer, D-7990 Friedrichshafen (DE); BUCKSCH, Manfred, D-7990 Friedrichshafen (DE)
(86) Internationale Anmeldenummer: EP9101900
(87) Internationale Veröffentlichungsnummer: WO9207204

(56) Entgegenhaltungen:
- EP-A- 0 272 381
- FR-A- 2 185 062
- GB-A- 2 076 907
- GB-A- 2 110 345
- ATZ AUTOMOBILTECHNISCHE ZEITSCHRIFT 91 Nr. 9, 1989, Seiten 445 - 453; H.SCHÖPF:'MERCEDES-BENZ FÜNFGANG-AUTOMATIKGETRIEBE'

## Beschreibung

Die Erfindung bezieht sich auf einen Pumpenantrieb für ein Automatgetriebe eines Kraftfahrzeuges, bei dem eine gemeinsam mit einem Primärteil eines Drehmomentwandlers ausgebildete Wandlerschale drehfest mit einer Hohlwelle verbunden ist, deren anderes Ende in das Innere eines Pumpengehäuses geführt ist und ein Pumpenrad antreibt, wobei die Hohlwelle über ein Wälzlager in einer Aufnahmebohrung des Pumpengehäuses gelagert ist, während in die Aufnahmebohrung an der der Wandlerschale zugewandten Seite des Wälzlagers ein Radialdichtring mit zumindest einer die Hohlwelle berührenden Dichtlippe und an der dem Pumpenrad zugewandten Seite ein Dichtring angeordnet ist, der gegenüber der Hohlwelle einen Dichtspalt einschließt.

Ein Pumpenantrieb der vorgenannten Gattung ist bekannt aus der Druckschrift ATZ automobiltechnische Zeitschrift 91 (1989) 9, Seite 445. Der als Kunststoffscheibe ausgebildete Dichtring ist dabei in die Aufnahmebohrung eingepreßt oder eingeklebt. Diese starre Fixierung des Dichtringes am Pumpengehäuse kann aufgrund der Fertigungstoleranzen dazu führen, daß der Dichtring einen ungleichmäßigen axialen Dichtspalt aufweist.

Es ist daher Aufgabe der vorliegenden Erfindung, bei einem Pumpenantrieb der vorgenannten Gattung einen Dichtring derart anzuordnen, daß er stets einen gleichmäßigen axialen Dichtspalt bildet.

Diese Aufgabe wird an einem Pumpenantrieb der vorgenannten Gattung nach den Merkmalen des kennzeichnenden Teils des Anspruches 1 dadurch gelöst, daß der Dichtring schwimmend in der Aufnahmebohrung geführt ist, wobei der Dichtring ein radiales Spiel gegenüber der Aufnahmebohrung und ein axiales Spiel gegenüber seiner durch einen Außenring des Wälzlagers und einen Anschlag gebildeten axialen Begrenzung hat. Das axiale Spiel wird hierbei vorbestimmt durch die Anlage des Außenringes am Pumpengehäuse über eine Anlagefläche. Bei rotierender Hohlwelle kann sich nunmehr der mit radialem Spiel in das Pumpengehäuse eingesetzte Dichtring zur Hohlwelle zentrieren, wodurch ein gleichmäßiger Dichtspalt erzielt wird. Toleranzen bei der Herstellung des Pumpengehäuses sowie der Lagerung der Hohlwelle können durch die radiale Beweglichkeit des Dichtringes ebenso ausgeglichen werden wie Radialbewegungen der Hohlwelle. Der sich dabei einstellende Dichtspalt kann dabei ausgelegt werden nach der erforderlichen Leckölmenge, die dem Wälzlager zugeführt werden soll. Durch den im Inneren der Hohlwelle und in der Pumpe herrschenden Druck wird der Dichtring an den Außenring des Wälzlagers gepreßt, so daß ebenfalls eine günstige Dichtwirkung erzielt wird.

Weitere Ausgestaltungen der Erfindung sind in den Unteransprüchen 2 bis 4 beschrieben.

Gemäß Anspruch 2 soll bei einer Ausbildung des Pumpenantriebs, bei der die den Dichtspalt passierende und das Wälzlager durchströmende Leckölmenge über zumindest eine im Pumpengehäuse angeordnete Rücklaufbohrung einem Ölsumpf oder der Pumpe saugseitig zugeleitet wird, zwischen der dem Drehmomentwandler zugewandten Seite des Außenringes und dem Radialdichtring ein Distanzring angeordnet sein, dessen Außendurchmesser dem Durchmesser der Aufnahmebohrung entspricht, wobei der Distanzring gegenüber der Hohlwelle einen Ölsammelraum bildet und zumindest eine radiale Rücklauföffnung hat. Über diesen Distanzring ist das Wälzlager, das eine ringförmige Schulter aufweist, an einer Anschlagfläche der Aufnahmebohrung verspannt. Das sich im Ölsammelraum ansammelnde Lecköl wird über die Radialbohrungen des Distanzringes den bzw. der Rücklaufbohrung zugeleitet.

Weiterhin soll gemäß Anspruch 3 zwischen dem Distanzring und dem Radialdichtring eine Führungsscheibe, die gegenüber der Hohlwelle radiales Spiel aufweist, angeordnet sein. Diese Führungsscheibe dient als Vorzentrierung bei der Montage des Pumpenantriebs und schützt das Wälzlager sowie den Dichtring vor einer Beschädigung während der Montage.

Schließlich soll gemäß Anspruch 4 der Dichtring aus einem Werkstoff hergestellt sein, der den gleichen Wärmeausdehnungskoeffizienten aufweist wie die Hohlwelle. Durch die Verwendung eines entsprechenden Werkstoffes für den Dichtring kann somit auch bei extremen Temperaturschwankungen für einen stets gleichmäßigen Dichtspalt gesorgt werden.

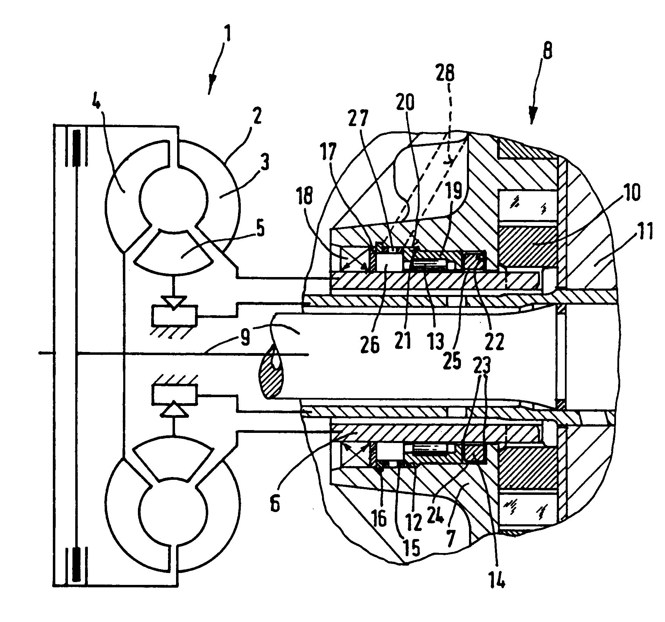

Zur weiteren Erläuterung der Erfindung wird auf die Zeichnung verwiesen, in der ein Ausführungsbeispiel vereinfacht dargestellt ist. Die einzige Figur zeigt eine Teilansicht eines Automatgetriebes mit einem schematisch dargestellten Drehmomentwandler und einem Pumpenantrieb im Längsschnitt.

In der Figur ist mit 1 ein Drehmomentwandler bezeichnet, dessen Wandlerschale 2 ein als Pumpe wirkendes Primärteil 3 drehfest aufnimmt. Innerhalb der Wandlerschale 2 sind außerdem ein Turbinenrad 4 und ein Leitrad 5 angeordnet. Die von einer nicht näher dargestellten Kurbelwelle einer Brennkraftmaschine angetriebene Wandlerschale 2 ist drehfest verbunden mit einer Hohlwelle 6, die mit ihrem anderen Ende in das Innere eines Pumpengehäuses 7 einer als Sichelpumpe ausgebildeten Pumpe 8 geführt ist. Diese Pumpe 8 dient zur Druckmittelversorgung eines nicht dargestellten Steuersystems und zur Schmiermittelversorgung eines vom Turbinenrad 4 des Drehmomentwandlers 1 über eine koaxial zur Hohlwelle 6 verlaufende Eingangswelle 9 angetriebenen Automatgetriebes.

Die Hohlwelle 6 nimmt dabei ein Pumpenrad 10 der Pumpe 8 auf. Das Pumpengehäuse 7 ist mit einer Zwischenplatte 11 des Automatgetriebes verbunden und weist eine Aufnahmebohrung 12 auf, in der die Hohlwelle 6 gelagert ist. Die besondere Ausgestaltung der Lagerung der Hohlwelle 6 im Pumpengehäuse 7 sowie deren besondere Abdichtung wird nachfolgend erläutert. Als Lagerung dient ein Wälzlager 13, das vorzugsweise als Nadellager ausgebildet sein soll. In Richtung des Pumpenrades 10 ist dem Wälzlager 13 ein Dichtring 14 benachbart, während sich an das Wälzlager 13 in Richtung der Wandlerschale 2 ein Distanzring 15, ein Sprengring 16, eine Führungsscheibe 17 und schließlich ein Radialdichtring 18 anschließen.

Das Wälzlager 13 weist einen Außenring 19 auf, der mit einer Ringschulter 20 in der Aufnahmebohrung 12 in axialer Richtung an einer Anlagefläche festgelegt ist. Zwischen diesem in axialer Richtung fixierten Außenring 19 und einem Anschlag 22 der Aufnahmebohrung ist der Dichtring 14 derart angeordnet, daß er zum einen gegenüber dem Außenring 19 und dem Anschlag 22 axiales Spiel 23 hat und daß er zum anderen zwischen seinem äußeren Umfang und der Aufnahmebohrung 12 radiales Spiel 24 hat. Außerdem ist ein gleichmäßiger Dichtspalt zwischen dem Dichtring 14 und der Hohlwelle 6 vorgesehen.

Der Distanzring 15, über den mit Hilfe des Sprengrin ges 16 das Wälzlager 13 in axialer Richtung fixiert ist, ist außen in die Aufnahmebohrung 12 eingepaßt, dagegen weist er an seinem inneren Umfang gegenüber der Hohlwelle einen Abstand auf, wodurch ein Ölsammelraum 26 gebildet wird. Weiterhin hat der Distanzring zumindest eine radiale Rücklauföffnung 27, die in eine Rücklaufbohrung 28 des Pumpengehäuses 7 mündet. Über die Rücklaufbohrung wird das durch den Dichtspalt 25 das Wälzlager 13 durchströmende Schmiermittel, das sich anschließend im Ölsammelraum 26 angesammelt hat, saugseitig zur Pumpe 8 oder in einen ölsumpf des Automatgetriebes geleitet. Der Radialdichtring 18 verhindert, daß sich das nahezu drucklos im Ölsammelraum 26 ansammelnde Schmiermittel ins Freie gelangt. Auf die vorgenannte Weise ist der Drehmomentwandler 1 mittels der Hohlwelle 6 im Pumpengehäuse 7 gelagert, und es wird für eine Abdichtung des im Inneren der Hohlwelle 6 vom Drehmomentwandler 1 her anstehenden Druckmittels und des Druckmittels aus der Pumpe 8 gesorgt.

Der Dichtring 14 kann sich aufgrund seines am Umfang vorhandenen radialen Spiels 24 derart zur Hohlwelle 6 zentrieren, daß ingesamt ein gleichmäßiger Dichtspalt 25 vorhanden ist. Über diesen gleichmäßigen Dichtspalt wird dem Wälzlager 13 eine vorbestimmte Schmiermittelmenge zugeleitet, während schließlich nach außen hin der Radialdichtring 18 für eine absolute Abdichtung der Lagerung sorgt. Bei einem Stillstand der Hohlwelle 6 herrscht weiterhin im Inneren der Hohlwelle 6 vom Drehmomentwandler 1 her ein Druck, der stirnseitig auf den Dichtring 14 wirkt und diesen dichtend an den Außenring 19 des Wälzlagers 13 preßt. Durch die erfindungsgemäße Anordnung und Ausbildung des Dichtringes kann somit für eine sehr wirkungsvolle Abdichtung der Lagerung der Hohlwelle 6 gesorgt werden.

### Bezugszeichen

- 1: Drehmomentwandler
- 2: Wandlerschale
- 3: Pumpenrad
- 4: Turbinenrad
- 5: Leitrad
- 6: Hohlwelle
- 7: Pumpengehäuse
- 8: Pumpe
- 9: Eingangswelle
- 10: Pumpenrad
- 11: Zwischenplatte
- 12: Aufnahmebohrung
- 13: Wälzlager
- 14: Dichtring
- 15: Distanzring
- 16: Sprengring
- 17: Führungsscheibe
- 18: Radialdichtring
- 19: Außenring
- 20: Ringschulter
- 21: Anlagefläche
- 22: Anschlag
- 23: axiales Spiel
- 24: radiales Spiel
- 25: Dichtspalt
- 26: Ölsammelraum
- 27: radiale Rücklauföffnung
- 28: Rücklaufbohrung

## Patentansprüche

1. Pumpenantrieb für ein Automatgetriebe eines Kraftfahrzeugs, bei dem eine gemeinsam mit einem Primärteil (3) eines Drehmomentwandlers (1) ausgebildete Wandlerschale (2) drehfest mit einer Hohlwelle (6) verbunden ist, deren anderes Ende in das Innere eines Pumpengehäuses (7) geführt ist und ein Pumpenrad (10) antreibt, wobei die Hohlwelle (6) über ein Wälzlager (13) in einer Aufnahmebohrung (12) des Pumpengehäuses (7) gelagert ist, während in die Aufnahmebohrung (12) an der der Wandlerschale (2) zugewandten Seite des Wälzlagers ein Radialdichtring (18) mit zumindest einer die Hohlwelle (6) berührenden Dichtlippe und an der dem Pumpenrad (10) zugewandten Seite ein Dichtring (14) angeordnet sind, der gegenüber der Hohlwelle (6) einen Dichtspalt (25) einschließt, dadurch **gekennzeichnet**, daß der Dichtring (14) schwimmend in der Aufnahmebohrung (12) geführt ist, der Dichtring (14) ein radiales Spiel (24) gegenüber der Aufnahmebohrung (12) und ein axiales Spiel (23) gegenüber seiner durch einen Außenring (19) des Wälzlagers (13) und einen Anschlag (22) gebildeten axialen Begrenzung hat, wobei das axiale Spiel (23) vorbestimmt wird durch die Anlage des Außenrings (19) am Pumpengehäuse (7) über die Anlagefläche (21).

2. Pumpenantrieb nach Anspruch 1, bei dem die den Dichtspalt (25) passierende und das Wälzlager (13) durchströmende Leckölmenge über zumindest eine im Pumpengehäuse (7) angeordnete Rücklaufbohrung (28) einem Ölsumpf oder der Pumpe saugseitig zugeleitet wird, dadurch **gekennzeichnet**, daß zwischen der dem Drehmomentwandler (1) zugewandten Seite des Außenrings (19) und dem Radialdichtring (18) ein Distanzring (15) angeordnet ist, dessen Außendurchmesser dem Durchmesser der Aufnahmebohrung (12) entspricht, wobei der Distanzring (15) gegenüber der Hohlwelle (6) einen Ölsammelraum (26) bildet und zumindest eine radiale Rücklauföffnung (27) hat.

3. Pumpenantrieb nach Anspruch 2, dadurch **gekennzeichnet**, daß zwischen dem Distanzring und dem Radialdichtring eine Führungsscheibe (17), die gegenüber der Hohlwelle (6) radiales Spiel aufweist, angeordnet ist.

4. Pumpenantrieb nach Anspruch 1, dadurch **gekennzeichnet**, daß der Dichtring (14) aus einem Werkstoff hergestellt ist, der den gleichen Wärmeausdehnungskoeffizienten wie die Hohlwelle (6) aufweist.

## Claims

1. Pump drive for an automatic transmission of a motor vehicle, in which a converter shell (2) constructed jointly with a primary part (3) of a torque converter (1) is non-rotatably connected to a hollow shaft (6), whose other end is conveyed into the interior of a pump housing (7) and drives a pump impeller (10), the hollow shaft (6) being supported by means of a rolling bearing (13) in a location hole (12) of the pump housing (7), while there are inserted into the location bore (12) at the end of the rolling bearing facing the converter shell (2) a rotary shaft seal (18) with at least one sealing lip touching the hollow shaft (6) and at the end facing the pump impeller (10) a sealing ring (14), which with the hollow shaft (6) encloses a sealing gap (25),
characterized in that the sealing ring (14) is guided in a floating manner in the location hole (12), the sealing ring (14) has a radial clearance (24) relative to the location hole (12) and an axial clearance (23) relative to its axial delimitation formed by an outer ring (19) of the rolling bearing (13) and a stop (22), the axial clearance (23) being predetermined by the application of the outer ring (19) against the pump housing (7) via the contact surface (21).

2. Pump drive according to claim 1, in which the leakage oil quantity passing the sealing gap (25) and flowing through the rolling bearing (13) is fed via at least one return bore (28) disposed in the pump housing (7) to an oil sump or the pump on the suction side, characterized in that disposed between the side of the outer ring (19) facing the torque converter (1) and the rotary shaft seal (18) is a distance ring (15), whose external diameter corresponds to the diameter of the location hole (12), the distance ring (15) with the hollow shaft (6) forming an oil collecting chamber (26) and having at least one radial return opening (27).

3. Pump drive according to claim 2, characterized in that disposed between the distance ring and the rotary shaft seal is a guide disc (17), which has radial clearance relative to the hollow shaft (6).

4. Pump drive according to claim 1, characterized in that the sealing ring (14) is made of a material which has the same coefficient of thermal expansion as the hollow shaft (6).

## Revendications

1. Entraînement de pompe pour une transmission automatique d'un véhicule à moteur, dans lequel une cuvette de convertisseur (2), réalisée en commun avec une partie primaire (3) d'un convertisseur de couple (1), est solidaire en rotation d'un arbre creux (6) dont l'autre extrémité est placée à l'intérieur d'un carter de pompe (7) et entraîne une roue de pompe (10), l'arbre creux (6) étant monté par un roulement (13) dans un alésage récepteur (12) du carter de pompe (7), tandis que l'alésage récepteur (12) contient, du côté de la cuvette de convertisseur (2) par rapport au roulement, un joint radial d'étanchéité (18), pourvu d'au moins une lèvre d'étanchéité touchant l'arbre creux (6), et du côté de la roue de pompe (10) une bague d'étanchéité (14) qui entoure un interstice étanche (25) en regard de l'arbre creux (6), **caractérisé** en ce que la bague d'étanchéité (14) est montée de manière flottante dans l'alésage récepteur (12), cette bague (14) ayant un jeu radial (24) par rapport à l'alésage récepteur (12) et un jeu axial (23) par rapport à sa limitation axiale formée par une bague extérieure (19) du roulement (13) et un arrêt (22), le jeu axial (23) étant prédéterminé par l'appui de la bague extérieure (19) contre le carter de pompe (7) au moyen d'une surface d'appui (21).

2. Entraînement de pompe selon la revendication 1, dans lequel la fuite d'huile passant par l'interstice étanche (25) et traversant le roulement (13) est conduite à un carter d'huile ou à l'aspiration de la pompe via au moins un alésage de retour (28) ménagé dans le carter de pompe (7), **caractérisé** en ce qu'une bague d'écartement (15), dont le diamètre extérieur correspond au diamètre de l'alésage récepteur (12), est disposée entre la face de la bague extérieure (19) du côté du convertisseur (1) et le joint radial d'étanchéité (18), et en ce que la bague d'écartement (15) définit une chambre collectrice d'huile (26) en regard de l'arbre creux (6) et comporte au moins un orifice radial de retour (27).

3. Entraînement de pompe selon la revendication 2, **caractérisé** en ce qu'une rondelle de guidage (17) ayant un jeu radial par rapport à l'arbre creux (6) est disposée entre la bague d'écartement et le joint radial d'étanchéité.

4. Entraînement de pompe selon la revendication 1, **caractérisé** en ce que la bague d'étanchéité (14) est faite d'un matériau qui présente le même coefficient de dilatation thermique que l'arbre creux (6).
